# EUROPEAN PATENT APPLICATION

(11) **EP 4 191 751 A1**
(43) Date of publication of application: **07.06.2023**
(21) Application number: 21883147.7
(22) Date of filing: 18.10.2021
(51) Int. Cl.: H01M 10/6553, H01M 10/6554, H01M 10/6556, H01M 10/6567, H01M 10/653, H01M 10/613, H01M 50/572, H01M 50/502, H01M 10/625

(54) **BATTERY BLOCKING UNIT AND BATTERY PACK INCLUDING SAME**

(30) Priority: 21.10.2020 KR 20200136759
(71) Applicant: LG Energy Solution, Ltd., Seoul 07335 (KR)
(72) Inventor: KIM, Chansol, Daejeon 34122 (KR)
(74) Representative: Plasseraud IP
(86) International application number: PCT/KR2021/014443
(87) International publication number: WO 2022/086076

(57) **Abstract**

A battery disconnect unit according to an embodiment of the present disclosure includes a contactor; a busbar electrically connected to the contactor; a heat dissipation sheet insert-injected together with at least a part of the busbar; and a cooling plate located under the heat dissipation sheet, wherein an end portion of the busbar is electrically connected to the contactor.

## Description

### [TECHNICAL FIELD]

### Cross Citation with Related Application(s)

This application claims the benefit of Korean Patent Application No. 10-2020-0136759 filed on October 21, 2020 with the Korean Intellectual Property Office, the contents of which are incorporated herein by reference in its entirety.

The present disclosure relates to a battery disconnect unit and a battery pack including the same, and more particularly, to a battery disconnect unit with improved heat dissipation performance, and a battery pack including the same.

### [BACKGROUND ART]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used. In such a battery module, a plurality of battery cells are connected in series or parallel to each other to form a battery cell stack, thereby capable of improving capacity and output.

Further, a battery disconnected unit (BDU) capable of disconnecting power may be disposed between a power conversion device and a battery module. The battery disconnect unit can disconnect the battery power in a situation such as a condition in which the current exceeds a set range, thereby improving the safety of the battery pack.

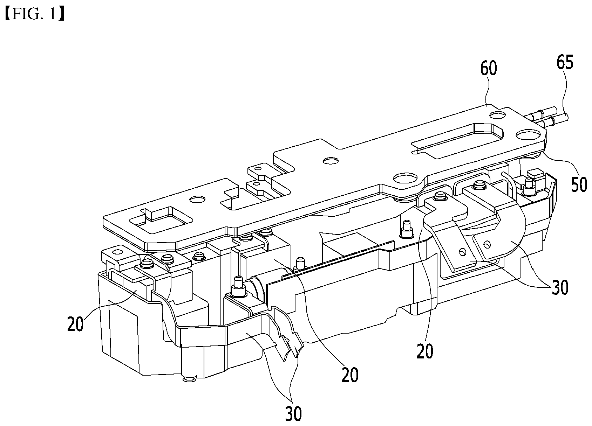

Fig. 1 is a perspective view of a conventional battery disconnect unit.

Referring to Fig. 1, a conventional battery disconnect unit includes a contactor 20, a busbar 30 electrically connected to the contactor 20, a heat transfer pad 50, and a cooling plate 60. Here, the cooling plate 60 is formed with a cooling flow path 65. Further, the cooling plate 60 is located on the contactor 20 and the busbar 30. Further, the heat transfer pad 50 is located between the cooling plate 60 and the contactor 20 and the busbar 30. Here, in the conventional battery disconnect unit, heat generated from the busbar 30 can be dissipated at the cooling plate 60 via the heat transfer pad 50.

In recent years, there has been a technical need to increase the required output of electric vehicles and reduce the charging time, whereby the current carrying amount of the parts in the battery disconnect unit has been increased. In particular, the conventional battery disconnect unit increases the cross-sectional area of the busbar in proportion to the amount of energization current to prevent excessive temperature rise of the battery disconnect unit. However, as shown in Fig. 1, there is a structural restriction on increasing the cross-sectional area of the busbar within the battery disconnect unit, whereby there is also a restriction on improving the heat dissipation performance. Therefore, there is a growing need for a battery disconnect unit which is improved in heat dissipation performance, while deviating from the structural restrictions of the conventional battery disconnect unit.

### [DETAILED DESCRIPTION OF THE INVENTION]

### [Technical Problem]

It is an object of the present disclosure to provide to a battery disconnect unit with improved heat dissipation performance, and a battery pack including the same.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a battery disconnect unit comprising: a contactor; a busbar electrically connected to the contactor; a heat dissipation sheet insert-injected together with at least a part of the busbar; and a cooling plate located under the heat dissipation sheet, wherein an end portion of the busbar is electrically connected to the contactor.

The end portion of the busbar is bent in a direction perpendicular to an upper surface of the heat dissipation sheet, and may extend toward the contactor.

The cooling plate may include a cooling flow path.

The cooling flow path may include an inlet and a discharge port that are formed on at least one side surface of the cooling plate.

A cooling water may be injected into the inlet.

The inlet and the outlet may be formed on the same side surface of the cooling plate.

The battery disconnect unit may further include a heat transfer pad located between the heat dissipation sheet and the cooling plate.

The heat transfer pad is a plate-shaped structure, and may include a silicone resin and a thermal conducting material.

A thickness of the busbar may be less than a thickness of the heat dissipation sheet.

The heat dissipation sheet may be made of a heat dissipation plastic material.

According to one aspect of the present disclosure, there is provided a battery pack comprising the above-mentioned battery disconnect unit.

### [Advantageous Effects]

According to embodiments, the present disclosure provides a battery disconnect unit including a heat dissipation sheet in which at least a part of the busbar is insert-injected together, and a battery pack including the same, which can be improved in the heat dissipation performance while minimizing the cross-sectional area of the busbar.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

Fig. 1 is a perspective view of a conventional battery disconnect unit;
Fig. 2 is a perspective view of the battery disconnect unit according to the present embodiment; and
Fig. 3 is a cross-sectional view showing a region A of the battery disconnect unit of Fig. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Hereinbelow, the battery disconnect unit according to one embodiment of the present disclosure will be described. However, the description herein is made based on the front surface among the front and rear surfaces of the battery disconnect unit, without being necessarily limited thereto, and even in the case of the rear surface, a description may be given with same or similar contents.

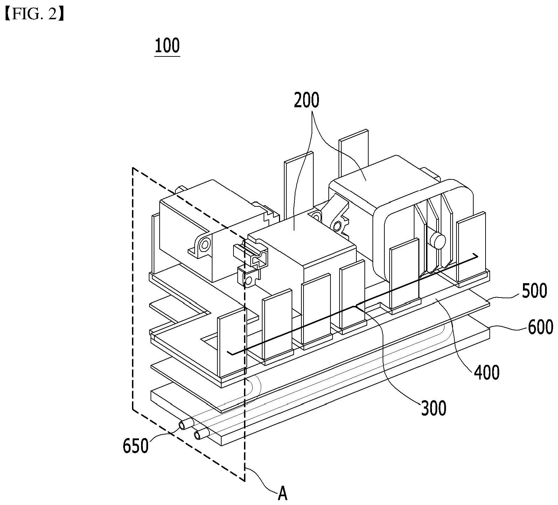

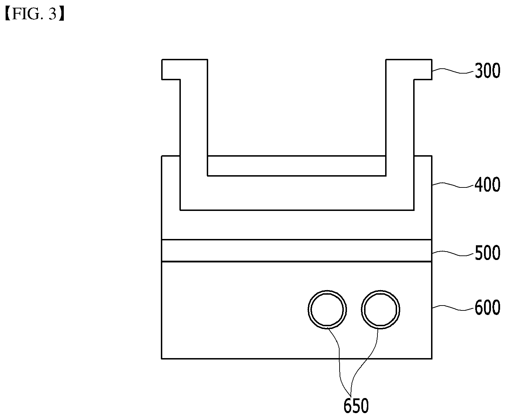

Fig. 2 is a perspective view of the battery disconnect unit according to the present embodiment. Fig. 3 is a cross-sectional view showing a region A of the battery disconnect unit of Fig. 2.

Referring to Fig. 2, a battery disconnect unit 100 according to the embodiments of the present disclosure includes a contactor 200; a busbar 300 electrically connected to the contactor 200; a heat dissipation sheet 400 insert-injected together with at least a part of the busbar 300; and a cooling plate 600 located under the heat dissipation sheet 400, wherein an end portion of the busbar 300 is electrically connected to the contactor 200.

Here, the battery disconnect unit 100 may be configured such that the battery pack is selectively electrically connected to a power transmission system which is an electrical load.

Further, the battery disconnect unit 100 includes a frame (not shown) in which parts such as the above-mentioned contactor 200, busbar 300, heat dissipation sheet 400, and cooling plate 600 can be mounted. The frame may be divided into an upper cover and a lower frame, wherein the parts may be mounted inside the lower frame, and the parts may be covered by the upper cover. In one example, the frame may be made of a plastic material.

The contactor 200 is configured to have a function of supplying and disconnecting a HV (high voltage) power to a device to which the battery disconnect unit 100 is applied. Here, the contactor 200 can be electrically connected between the terminal of the battery pack and the power transmission system, and can be controlled by a BMS (battery management system) or a VCM (vehicle control module).

Next, the busbar 300, the heat dissipation sheet 400, and the cooling plate 600 according to the present embodiment will be described in detail with reference to Figs. 2 and 3.

The busbar 300 is configured to connect the contactor 300 or the like to a terminal of a battery pack or a power transmission system. Here, an end portion of the busbar 300 may be electrically connected to the contactor 200. In one example, the busbar 300 may be a metal plate having electrical conductivity.

The heat dissipation sheet 400 may be formed by being insert-injected together with at least a part of the busbar 300. Thereby, the battery disconnect unit 100 according to the present embodiment has a structure in which the busbar 300 and the heat dissipation sheet 400 are integrated with each other, so that it can save space, and has advantages in manufacturing cost and manufacturing process. Further, the battery disconnect unit can prevent the insert-injected busbar 300 from being damaged by other parts, while fixing the busbar 300. In one example, the heat dissipation sheet 400 may be made of a heat dissipation plastic material.

Further, the heat dissipation sheet 400 is located between the lower part of the contactor 200 and the busbar 300, and the cooling plate 600, so that the heat dissipation sheet 400 can directly transfer heat generated from the busbar 300 to the cooling plate 600, and can be improved in heat dissipation performance.

Further, the end portion of the busbar 300 is bent in a direction perpendicular to the upper surface of the heat dissipation sheet 400 and can extend toward the contactor 200. More specifically, the heat dissipation sheet 400 may have a thickness larger than that of the busbar 300, so that at least a part of the busbar 300 may not be exposed to the outside. Thereby, only the end portion of the busbar 300 from the heat dissipation sheet 400 is exposed to the outside, so that the cross-sectional area of the busbar 300 electrically connected to the contactor 200 can be minimized. Further, the heat dissipation sheet 400 can come into contact with the front surface of at least a part of the insert-injected busbar 300, so that heat generated from the busbar 300 can be effectively dissipated via the heat dissipation sheet 400.

Further, the cooling plate 600 may be located under the heat dissipation sheet 400. Thereby, the heat dissipation sheet 400 may come into direct contact with the cooling plate 600, so that heat generated from the busbar 300 can be dissipated to the outside of the heat dissipation sheet 400.

More specifically, the cooling plate 600 may include a cooling flow path 650. The cooling flow path 650 may include an inlet and a discharge port that are formed on at least one side surface of the cooling plate 600. Further, the cooling flow path 650 may be configured such that the cooling water is injected via the inlet and the cooling water is discharged via the -outlet portion.

In one example, the cooling flow path 650 is configured such that the inlet and the discharge port can be formed on the same side surface of the cooling plate. However, the present disclosure is not limited thereto, and the inlet and the discharge port can be formed in various positions as long as it does not deviate from the limitations on the internal structure of the battery disconnect unit 100.

More specifically, when the battery disconnect unit 100 according to the present embodiment is disposed in the battery pack, a refrigerant path flowing for cooling may be formed in the battery pack. That is, a circulation structure may be formed in which the refrigerant flown-in from the outside of the battery pack absorbs heat generated from respective parts inside the battery pack, and then is discharged back to the outside of the battery pack.

Referring to Figs. 2 and 3, one surface of the cooling plate 600 may be exposed to the outside of the battery disconnect unit 100. Here, one surface of the cooling plate 600 is exposed to the outside of the battery disconnect unit 100 so that it can come into contact with or be connected to the refrigerant path of the battery pack.

In addition, the busbar 300 is insert-injected into the heat dissipation sheet 400, and heat generated in a large amount from the busbar 300 may be transferred to the cooling plate 600 via the heat dissipation sheet 400. At this time, the heat dissipation sheet 400 may come into direct contact with the cooling plate 600, so that the heat generated by the busbar 300 can be effectively cooled. Further, heat transferred to the cooling plate 600 from the heat dissipation sheet 400 can be transmitted to the refrigerant path of the battery pack located outside the battery disconnect unit 100 via the cooling plate 600. Thereby, the heat generated by the busbar 300 can be cooled more effectively.

Referring to Figs. 2 and 3, the battery disconnect unit 100 according to another embodiment of the present disclosure further includes a heat transfer pad 500 located between the heat dissipation sheet 400 and the cooling plate 600. In one example, the heat transfer pad 500 is a plate-shaped structure, and may include a silicone resin and a thermal conducting material. The thermal conducting material is not particularly limited, and may include metal powder, graphite, or the like. Further, according to another embodiment, the heat transfer pad 500 may be replaced with a heat transfer layer coated with a thermal interface material.

Here, the heat transfer pad 500 may be configured so as to be compressed between the heat dissipation sheet 400 and the cooling plate 600, whereby the surface contact between the heat dissipation sheet 400 and the cooling plate 600 can be further maximized. Further, it is possible to maintain indirect contact for heat transfer between the cooling plate 600 and the heat dissipation sheet 400 depending on the compression of the heat transfer pad 500.

The battery disconnect unit according to the present embodiments described above can be mounted together with various control and protection systems such as a battery management system (BMS) and a cooling system to form a battery pack.

The battery disconnect unit or the battery pack can be applied to various devices. For example, it can be applied to vehicle means such as an electric bike, an electric vehicle, and a hybrid electric vehicle, and may be applied to various devices capable of using a secondary battery, without being limited thereto.

Although the invention has been shown and described above with reference to the preferred embodiments, the scope of the present disclosure is not limited thereto, and numerous other modifications and improvements can be devised by those skilled in the art using the basic principles of the invention described in the appended claims, which also falls under the spirit and scope of the present disclosure.

### [Description of Reference Numerals

100: battery disconnect unit
200: contactor
300: busbar
400: heat dissipation sheet
500: heat transfer pad
600: cooling plate
650: cooling flow path

## Claims

1. A battery disconnect unit comprising:
a contactor;
a busbar electrically connected to the contactor;
a heat dissipation sheet insert-injected together with at least a part of the busbar; and
a cooling plate located under the heat dissipation sheet,
wherein an end portion of the busbar is electrically connected to the contactor.

2. The battery disconnect unit according to claim 1, wherein:
the end portion of the busbar is bent in a direction perpendicular to an upper surface of the heat dissipation sheet, and extends toward the contactor.

3. The battery disconnect unit according to claim 1, wherein:
the cooling plate comprises a cooling flow path.

4. The battery disconnect unit according to claim 1, wherein:
the cooling flow path comprises an inlet and an outlet that are formed on at least one side surface of the cooling plate.

5. The battery disconnect unit according to claim 4, wherein:
a cooling water is injected into the inlet.

6. The battery disconnect unit according to claim 4, wherein:
the inlet and the outlet are formed on the same side surface of the cooling plate.

7. The battery disconnect unit according to claim 1, wherein:
which further comprises a heat transfer pad located between the heat dissipation sheet and the cooling plate.

8. The battery disconnect unit according to claim 7, wherein:
the heat transfer pad is a plate-shaped structure, and comprises a silicone resin and a thermally conductive material.

9. The battery disconnect unit according to claim 1, wherein:
a thickness of the busbar is less than a thickness of the heat dissipation sheet.

10. The battery disconnect unit according to claim 1, wherein:
the heat dissipation sheet is made of a heat dissipation plastic material.

11. A battery pack comprising the battery disconnect unit according to claim 1.
